# EUROPÄISCHE PATENTSCHRIFT

(11) **EP 0 689 919 B1**
(45) Veröffentlichungstag und Bekanntmachung des Hinweises auf die Patenterteilung: **12.04.2000**
(21) Anmeldenummer: 95109525.6
(22) Anmeldetag: 20.06.1995
(51) Int. Cl.: B29C 41/28, B29C 59/04, B32B 31/00, B29C 33/40, B32B 27/12

(54) **Band zur Herstellung von Kunststoffolien sowie Verfahren zur Herstellung dieses Bandes**
Belt for the fabrication of plastic films and method for its production
Bande pour la fabrication de films plastique et procédé pour la produire

(30) Priorität: 30.06.1994 DE 4422871
(43) Veröffentlichungstag der Anmeldung: 03.01.1996
(73) Patentinhaber: Benecke-Kaliko Aktiengesellschaft, D-30419 Hannover (DE)
(72) Erfinder: Hildebrandt, Gustav, D-31749 Auetal (DE); Büscher, Horst, Dipl.-Ing., D-30851 Langenhagen (DE); Leiss, Dirk, Dr. Dipl.-Ing., D-30938 Grossburgwedel (DE); Taczkowski, Reiner, Dipl.-Ing., D-30169 Hannover (DE); Kruse, Hans-Hinrich, Dr. Dipl.-Chem., D-30890 Barsinghausen (DE)
(74) Vertreter: Leine, Sigurd, Dipl.-Ing.

(56) Entgegenhaltungen:
- EP-A- 0 308 280
- DE-A- 2 331 598
- DE-A- 3 203 700
- FR-A- 2 537 496
- GB-A- 1 133 783
- DATABASE WPI Section Ch, Derwent Publications Ltd., London, GB; Class A, AN 68-41273Q & JP-B-44 026 729 ( TOYO RAYON CO LTD)

## Beschreibung

Die Erfindung betrifft ein Band der im Oberbegriff des Anspruchs 1 genannten Art zur Herstellung von Kunststoffolien.

Es ist bekannt, eine Kunststoffolie dadurch herzustellen, daß auf eine Unterlage eine dünne Schicht flüssigen oder pastösen Kunststoffes aufgebracht, der Kunststoff zum Aushärten gebracht und dann die Schicht als Folie abgezogen wird. Dies geschieht meistens in einem kontinuierlichen Verfahren, wobei die Unterlage eine endloses, meistens auch endliches Mitläuferband ist, dessen Oberfläche glatt ist oder ein reliefartiges Muster aufweist.

Ein bekanntes Band dieser Art besteht aus Papier, in das ein reliefartiges Muster eingeprägt ist, das sich bis auf die Rückseite des Papiers erstreckt, so daß sich im Querschnitt eine gewellte Feinstruktur entsprechend der Prägung ergibt. Zur Verbesserung der Oberflächeneigenschaften, insbesondere um die später aufgegossene oder aufgestrichene Kunststoffmasse als Folie besser abziehen zu können, ist das geprägte Papier nach der Prägung mit einer dünnen Schicht von Kunststoff versehen.

Dieses bekannte Band ist zwar einfach und damit preisgünstig herzustellen, jedoch hat es mehrere Nachteile. Ein Nachteil besteht darin, daß es eine geringe Reißfestigkeit hat. In der Praxis treten schon schnell insbesondere an den Rändern Risse ein, die zu einem Ausschuß beim herzustellenden Kunststoffband und auch zum Reißen des Bandes selbst führen können, wodurch die Produktion unterbrochen wird und nach einer eventuellen Reparatur Diskontinuitäten in dem reliefartigen Muster entstehen, die Reparaturstelle also sichtbar ist.

Ein weiterer Nachteil dieses bekannten Bandes besteht darin, daß in dem Papier nur ein flaches reliefartiges Muster, beispielsweise eine Narbung, einprägbar ist, so daß nur eine unvollkommene Wiedergabe des gewünschten reliefartigen Musters möglich ist. Hinzu kommt der Nachteil, daß die Trennkräfte bei wiederholter Verwendung des Bandes größer werden, das Band also nur eine geringe Standfestigkeit hat. Die Zahl der wiederholten Verwendungen dieses bekannten Bandes ist daher gering, wodurch trotz der geringen Herstellunskosten für das Band sich die Gesamtkosten für die mit dem Band herzustellende Kunststoffolie wieder erhöhen, der Vorteil des geringen Preises des Bandes also wieder verlorengeht.

Ein weiterer Nachteil dieses bekannten und viel verwendeten Bandes besteht in seiner geringen Formstabilität und der Fähigkeit zur Aufnahme von Feuchtigkeit, die die Festigkeit, Formstabilität und Handhabung in der Praxis beeinträchtigt.

Durch AT 262 594 ist ein Band bekannt, das eine reißfeste Schicht, beispielsweise aus einem Gewebe, aufweist, auf das auf einer Seite eine Schicht aus Polysiloxangummi aufgebracht ist, dessen Oberfläche ein reliefartiges Muster aufweist. Das Polysiloxangummi (Silikongummi) ermöglicht zwar eine genaue Wiedergabe einer feinen Oberflächenstruktur, beispielsweise einer Ledernarbung, jedoch hat das Band mehrere Nachteile. Ein Nachteil besteht darin, daß der Preis wesentlich höher, beispielsweise zehnfach, ist als der Preis des zuvor beschriebenen Bandes aus Papier. Das wiegt den Vorteil nicht auf, daß die Standzeit eines Silikonbandes etwa viermal länger ist als die des beschriebenen Papierbandes. Außerdem ist die Polysiloxangummischicht fertigungsbedingt verhältnismäßig dick. Dadurch ergeben sich Nachteile in der Fertigung, wenn derartige Bänder in der Fertigung nicht als endlose Bänder verwendet werden, sondern als endliche Bänder. Von einem großen Wickel wird das Band abgewickelt, durchläuft die Gieß- und Aushärtestraße und wird dann nach Entfernen der hergestellten Kunststoffolie wieder aufgewickelt. Dadurch ergeben sich verhältnismäßig große Wickel oder kurze Bandlängen, die zu einer häufigen Unterbrechung des Fertigungsvorganges führen.

Durch eine ältere, nicht vorveröffentlichte deutsche Patentanmeldung P 43 22 140.8 ist eine Kunststoffolie auf der Basis von Polymerisaten des Propylens und Ethylens bekannt, die gegebenenfalls Verarbeitungshilfsmittel, Füllstoffe, Pigmente oder andere Zusatzmittel enthält. Sie enthält a) ein Homopolymerisat des Propylens mit einem MFI-Wert (230°C/2,16 kg) von etwa 0,8 bis 3,0 g/10min, einem Schmelzpunkt Tm von etwa 154 bis 168°C (bestimmt mit DSC) und einem E-Modul von etwa 900 bis 1500 N/mm² (bestimmt DIN 53457) und b) ein Homopolymerisat des Ethylens mit einem MFI-Wert (190°C/2,16 kg) von etwa 1,5 bis 3,0 g/10min, einem Schmelzpunkt Tm von etwa 110 bis 130°C und einem E-Modul von etwa 200 bis 400 N/mm². Diese Kunststoffolie ist nicht unmittelbar zur Herstellung von Kunststoffolien durch Aufbringen von flüssigem oder pastösem Kunststoff geeignet.

Durch DE 32 03 700 A1 ist ein Band der im Oberbegriff des Anspruchs 1 genannten Art bekannt, bei dem auf einer reißfesten Schicht aus textilem Gewebe einseitig eine Beschichtung aus einem thermoplastischen Polypropylen aufgebracht ist, das geglättet oder negativ geprägt sein kann. Ein Nachteil dieses bekannten Bandes besteht darin, daß durch die Verwendung des Polypropylens die Prägung erschwert ist, weil das Polypropylen einen engen Schmelzbereich hat, so daß es sich schlecht durch Wärme und Druck prägen läßt.

Der Erfindung liegt die Aufgabe zugrunde, ein Band der betreffenden Art zur Herstellung von Kunststoffolien mit einer Oberfläche zu schaffen, die eine sehr feine Struktur und hohe Wiedergabetreue hat. Das Band soll außerdem sich einfach herstellen lassen, im Preis günstig und einfach in der Handhabung sein undlange Fertigungszeiten ermöglichen.

Die der Erfindung zugrundeliegende Aufgabe wird durch die im Kennzeichen des Anspruchs 1 angegebene Lehre bei einem Band gelöst.

Der Grundgedanke der Erfindung besteht darin, statt des bekannten Polysiloxangummis für die die Oberfläche aufweisende Schicht einen solchen Kunststoff zu verwenden, der neben dem Polypropylen Polyethylen aufweist. Es hat sich überraschend gezeigt, daß bei dieser Art von Kunststoff die Kontur der Oberfläche, ganz gleich of sie glatt ist oder ein gewünschtes reliefartiges Muster aufweist, in einfacher Weise durch Prägung unter Hitze und Druck erzeugt werden kann, da durch den Anteil von Polyethylen der Temperaturbereich der Erweichung und damit das Verarbeitungsfenster vergrößert wird. Die Kontur kann daher mit großer Treue wiedergegeben werden, auch dann, wenn die Dicke der Schicht des Kunststoffes gering, jedenfalls wesentlich geringer als die Dicke der Schicht von Polysiloxangummi des bekannten Bandes ist. Außerdem ist die Standzeit des erfindungsgemäßen Bandes insbesondere aufgrund des Anteils von Talkum wesentlich länger. Sie beträgt etwa das Dreifache gegenüber dem bekannten Polysiloxangummiband und etwa das Fünfzehnfache gegenüber dem bekannten Papierband.

Weitere Vorteile bestehen in der hohen Formstabilität und der Sicherheit gegen eine Beeinflussung durch wäßrige Lösungen und darin, daß die Dicke der Schicht aus Kunststoff nur sehr gering zu sein braucht. In einem Wickel eines Bandes kann daher eine wesentlich größere Länge aufgewickelt werden. Dadurch ergeben sich in der Fertigung eines Kunststoffbandes längere Laufzeiten und weniger häufig Umrüstungen, was sich beides auf den Endpreis des fertigen Kunststoffbandes günstig auswirkt. Die Schicht aus Kunststoff hat eine dehäsive Wirkung, so daß zusätzliche Trennmittel nicht erforderlich sind, um eine ausvulkanisierte Kunststoffolie von dem erfindungsgemäßen Band abziehen zu können. Das erfindungsgemäße Band hat darüber hinaus eine hohe mechanische Festigkeit, insbesondere gegenüber seitlichen Einrissen, die bei dem bekannten Band aus Papier schon nach kurzer Zeit auftreten. Schließlich besteht ein Vorteil des erfindungsgemäßen Bandes darin, daß wegen der thermoplastischen Verformbarkeit des Kunststoffes anders als bei dem bekannten Polysiloxangummiband eine Erneuerung der Oberfläche, insbesondere eines reliefartigen Musters darin ganz einfach durch erneutes Prägen unter Wärme erfolgen kann, wobei sich wieder der Vorteil des weiten Temperaturbereichs der Erweichung und damit die leichte Verarbeitbarkeit bei hoher Wiedergabetreue ergibt.

Gemäß einer Weiterbildung der Erfindung beträgt der Anteil von Polyethylen zweckmäßigerweise ungefähr 20 %.

Ein Band der in Anspruch 1 angegebenen Art kann in der Weise hergestellt werden, daß auf ein reißfestes Band beispielsweise aus Glasfasergewebe eine Schicht aus Polypropylen mit einem Anteil von 20 % Polyethylen und Talkum aufweisenden Kunststoff aufgebracht wird, was natürlich einschließt, daß auch die Schicht von Polypropylen mit einem Anteil von 20 % Polyethylen und Talkum beispielsweise in Form einer Folie auf das reißfeste Band aufgebracht werden kann. Die Schicht wird dann bis zur Erweichung erwärmt, die freie Oberfläche dieser Schicht wird dann mittels einer in ihrer Umfangsfläche ein Positiv des gewünschten reliefartigen Musters aufweisenden Prägewalze geprägt, wonach die Schicht bzw. das gesamte Band zur Abkühlung gebracht wird, so daß dann sich das reliefartige Muster bleibend in der Oberfläche der Schicht befindet. Besonders vorteilhaft ist es dabei, wenn die Schicht bis zur Verflüssigung erwärmt wird. Auf diese Weise ist diese Schicht in der Lage, auch in feine Strukturen eines reliefartigen Musters einzudringen und dieses naturgetreu wiederzugeben, was beispielsweise bei Vorlagen in Form von Leder oder dergleichen von besonderer Bedeutung ist.

Zum Prägen der erweichten oder verflüssigten Oberfläche kann eine Prägewalze verwendet werden, deren Prägeoberfläche aus Stahl, vorteilhafterweise jedoch aus Polysiloxangummi besteht. Es ist auch zweckmäßig, die Polypropylen aufweisende Schicht vor der Verbindung mit dem reißfesten Band mit einem Primer zu versehen.

Die Schicht aus Kunststoff enthält zweckmäßigerweise a) ein Homopolymerisat des Propylens mit einem MFI-Wert (230°C/2,16 kg) von 0,8 bis 3,0 g/10min, einem Schmelzpunkt Tm von etwa 154 bis 168°C (bestimmt mit DSC) und einem E-Modul von etwa 900 bis 1500 N/mm² (bestimmt nach DIN 53457) und b) ein Homopolymerisat des Ethylens mit einem MFI-Wert (190°C/2,16 kg) von etwa 1,5 bis 3,0 g/10min, einem Schmelzpunkt Tm von etwa a110 bis 130°C und einem E-Modul von etwa 200 bis 400 N/mm², wobei auf 100 Gew.-Teile Homopolymerisat des Propylens etwa 5 bis 20 Gew.-Teile des Homopolymerisats des Ethylens entfallen.

Die Abkürzung "DSC" bedeutet Differential Scanning Calometry und wird im einzelnen beschrieben in Marti et al, "Angewandte chemische Thermodynamik und Thermoanalytik (Experimenta Suppl. 37), Basel: Birkhäuser 1979.

Vorzugsweise hat das Homopolymerisat des Propylens eine enge Molekulargewichtsverteilung. Derartige Produkte werden im Handel als CR-Produkte erhalten (CR = Controlled Rheology). Als Homopolymerisat des Ethylens ist insbesondere ein solches Produkt geeignet, das ein niedrig-dichtes Homopolymerisat des Ethylens mit linearer Struktur (LLDPE) oder ein unter hohem Druck hergestelltes Polyethylen niedriger Dichte (LDPE) enthält. Der Begriff "Homopolymerisat" soll bedeuten, daß dieses Polymerisat im wesentlichen aus Ethylen bzw. Propylen besteht. Auf keinen Fall handelt es sich um ein "Copolymerisat". Geringe andere Monomereneinheiten können demzufolge einbezogen sein. Im allgemeinen fällt unter ein "Homopolymerisat" im Sinne der vorliegenden Erfindung auch ein solches Polymerisat, das neben Ethylen bzw. Propylen bis zu etwa 10 Mol% ein oder mehrere Comonomere enthält, insbesondere in form von Isopren, 1,3-Butadien, Ethylen (im Falle des Homopolymerisats des Propylens), Propylen (im Falle des Homopolymerisats des Ethylens), Buten, Hexen und Octen bzw. deren Isomere.

Die Eigenschaften des die Oberfläche bildenden Kunststoffes können durch Zusatzstoffe, die in den thermoplastischen Kunststoff eingearbeitet werden, modifiziert sein. So können im Kunststoff beispielsweise Füllstoffe, wie Metalloxide, Metallcarbonate, insbesondere Calciumcarbonate und Dolomit, Metalldioxide und Metallhydroxide, Gleitmittel wie C₁₂-C₃₆-Fettsäuren, Fettalkohole, Fettsäureester und -amide, Farbmittel in Form von Farbpigmenten, z.B. Titandioxid oder Ruß, sowie organische Farbstoffe, Stabilisatoren, wie Oxidationsverzögerer und Wärmestabilisatoren, z.B. sterisch gehinderte Phenole, Hydrochinone, substituierte Vertreter dieser Gruppe und Mischungen derselben, UV-Stabilisatoren, z.B. verschiedene substituierte Resorcine, Salicylate, Benzotriazole und Benzophenone, sowie andere übliche Modifizierungsmittel enthalten sein. Auch können als Zusatzstoffe Verarbeitungshilfsmittel, wie hochmolekulare Acrylate oder Acrylat-Copolymere, herangezogen werden. Sie steuern die Fließeigenschaften des Schmelzprozesses während der Verarbeitung.

Eine besonders vorteilhafte Ausgestaltung des die Oberfläche bildenden Kunststoffs enthält zusätzlich ein Ethylen-Propylen-Copolymerisat, wobei auf 100 Gew.-Teile Homopolymerisat des Propylens etwa 5 bis 40 Gew.-Teile, insbesondere etwa 10 bis 25 Gew.-Teile des Ethylen-Propylen-Copolymerisats entfallen. Hierbei wird es bevorzugt, daß das Ethylen-Propylen-Copolymerisat einen MFI-Wert (230°C/2,16 kg) von etwa 1 bis 4 g/10min, einen Schmelzpunkt Tm von etwa 140 bis 155°C und einen E-Modul von etwa 400 bis 700 N/mm² aufweist.

## Patentansprüche

1. Band zur Herstellung von Kunststoffolien, mit einer reißfesten Schicht und einer damit verbundenen Schicht aus Kunststoff mit einer der reißfesten Schicht abgewandten Oberfläche zum Aufbringen von flüssigem oder pastösem Kunststoff für die herzustellende Kunststoffolie, wobei die die Oberfläche aufweisende Schicht aus Kunststoff wenigstens teilweise Polypropylen aufweist, **dadurch gekennzeichnet**, daß die Polypropylen aufweisende Schicht Anteile von Polyethylen sowie Talkum enthält.

2. Band nach Anspruch 1, **dadurch gekennzeichnet**, daß der Anteil des Polyethylens in dem Polypropylen ungefähr 20 % beträgt.

3. Band nach Anspruch 1, **dadurch gekennzeichnet**, daß der Kunststoff der die Oberfläche aufweisenden Schicht auf der Basis von Polymerisation des Propylens und Ethylens gebildet ist und gegebenenfalls Verarbeitungshilfsmittel, Füllstoffe, Pigmente oder andere Zusatzmittel enthält, wobei der Kunststoff enthält
a) ein Homopolymerisat des Propylens mit einem MFI-Wert (230°C/2,16 kg) von etwa 0,8 bis 3,0 g/10min, einem Schmelzpunkt Tm von etwa 154 bis 168°C (bestimmt mit DSC) und einem E-Modul von etwa 900 bis 1500 N/mm² (bestimmt nach DIN 53457) und
b) ein Homopolymerisat des Ethylens mit einem MFI-Wert (190°C/2,16 kg) von etwa 1,5 bis 3,0 g/10min, einem Schmelzpunkt Tm von etwa 110 bis 130°C und einem E-Modul von etwa 200 bis 400 N/mm², wobei auf 100 Gew.-Teile Homopolymerisat des Propylens etwa 5 bis 20 Gew.-Teile des Homopolymerisats des Ethylens entfallen.

4. Band nach Anspruch 3, **dadurch gekennzeichnet**, daß der Kunststoff
a) ein Homopolymerisat des Propylens mit einem MFI-Wert (230°C/2,16 kg) von etwa 1 bis 2 g/10 min, einem Schmelzpunkt Tm von etwa 158 bis 164°C und einem E-Modul von etwa 1100 bis 1300 N/mm², insbesondere in Form eines CR-Produktes, und
b) ein Homopolymerisat des Ethylens mit einem MFI-Wert (190°C/2,16 kg) von etwa 1,5 bis 2 g/10min, einem Schmelzpunkt Tm von etwa 110 bis 120°C und einem E-Modul von etwa 250 bis 350 N/mm² enthält.

5. Band nach Anspruch 3 oder 4, **dadurch gekennzeichnet**, daß der Kunststoff ein niedrig-dichtes Homopolymerisat des Ethylens mit linearer Struktur (LLDPE) und/oder ein unter hohem Druck hergestelltes Polyethylen niedriger Dichte (LDPE) enthält.

6. Band nach Anspruch 4 oder 5, **dadurch gekennzeichnet**, daß auf etwa 100 Gew.-Teile Homopolimerisat des Propylens etwa 8 bis 12 Gew.-Teile Homopolymerisat des Polyethylens entfallen.

7. Band nach Anspruch 1, **dadurch gekennzeichnet,** daß der Kunststoff zusätzlich ein Ethylen-Propylen-Copolymerisat enthält, wobei auf 100 Gew.-Teile Homopolymerisat des Propylens etwa 5 bis 40 Gew.-Teile, insbesondere etwa 10 bis 25 Gew.-Teile des Ethylen-Propylen-Copolymerisats entfallen.

8. Band nach mindestens einem der vorhergehenden Ansprüche 3 bis 7, **dadurch gekennzeichnet**, daß das Ethylen-Propylen-Copolymerisat einen MFI-Wert (230°C/2,16 kg) von etwa 1 bis 4 g/10min, einen Schmelzpunkt Tm von etwa 140 bis 155°C und einen E-Modul von etwa 400 bis 700 N/mm² aufweist.

9. Band nach Anspruch 8, **dadurch gekennzeichnet**, daß das Ethylen-Propylen-Copolymerisat einen MFI-Wert (230°C/2,16 kg) von etwa 1,2 bis 2,0 g/10min, einen Schmelzpunkt Tm von etwa 142 bis 150°C und einen E-Modul von 500 bis 600 N/mm² aufweist.

## Claims

1. A strip for the production of plastic foils, having a rupture-resistant layer and a layer of plastic material connected thereto with a surface, faced away from the rupture-resistant layer, for the application of the liquid or pasty plastic material for the plastic foil to be produced, wherein the layer of plastic material comprising the surface comprises polypropylene at least to some extent,
**characterised in that** the layer comprising polypropylene contains percentages of polyethylene and also talc.

2. A strip according to Claim 1,
**characterised in that** the percentage of polyethylene in the polypropylene is roughly 20 %.

3. A strip according to Claim 1,
**characterised in that** the plastic material of the layer comprising the surface is formed on the basis of polymerisation of the propylene and ethylene and possibly contains auxiliary processing agents, fillers, pigments or other blending agents, in which case the plastic material contains
a) a homopolymerisate of the propylene with an MFI value (230°C/2.16 kg) of roughly 0.8 to 3.0 g/10 min, with a melting point Tm of roughly 154 to 168°C (determined by DSC) and a modulus of elasticity of roughly 900 to 1500 N/mm2 (determined in accordance with DIN 53457) and
b) a homopolymerisate of the ethylene with an MFI value (190°C/2.16 kg) of roughly 1.5 to 3.0 g/10 min, a melting point Tm of roughly 110 to 130°C and a modulus of elasticity of roughly 200 to 400 N/mm², wherein for 100 parts by weight homopolymerisate of the propylene there are roughly 5 to 20 parts by weight homopolymerisate of the ethylene.

4. A strip according to Claim 3,
**characterised in that** the plastic material contains
a) a homopolymerisate of the propylene with an MFI value (230°C/2.16 kg) of roughly 1 to 2 g/10 min, a melting point Tm of roughly 158 to 164°C and a modulus of elasticity of roughly 1100 to 1300 N/mm², in particular in the form of a CR product, and
b) a homopolymerisate of the ethylene with an MFI value (190°C/2.16 kg) of roughly 1.5 to 2 g/10 min, a melting point Tm of roughly 110 to 120° and a modulus of elasticity of roughly 250 to 350 N/mm².

5. A strip according to Claim 3 or 4,
**characterised in that** the plastic material contains a low-density homopolymerisate of the ethylene with a linear structure (LLDPE) and/or a low-density polyethylene produced under high pressure (LDPE).

6. A strip according to Claim 4 or 5,
**characterised in that** for roughly 100 parts by weight homopolymerisate of the propylene there are roughly 8 to 12 parts by weight homopolymerisate of the polyethylene.

7. A strip according to Claim 1,
**characterised in that** the plastic material additionally contains an ethylene-propylene copolymerisate, wherein for 100 parts by weight homopolymerisate of the propylene there are roughly 5 to 40 parts by weight, in particular roughly 10 to 25 parts by weight of the ethylene-propylene copolymerisate.

8. A strip according to at least one of the preceding Claims 3 to 7,
**characterised in that** the ethylene-propylene copolymerisate has an MFI value (230°C/2.16 kg) of roughly 1 to 4 g/10 min, a melting point Tm of roughly 140 to 155°C and a modulus of elasticity of roughly 400 to 700 N/mm².

9. A strip according to Claim 8,
**characterised in that** the ethylene-propylene copolymerisate has an MFI value (230°C/2.16 kg) of roughly 1.2 to 2.0 g/10 min, a melting point Tm of roughly 142 to 150°C and a modulus of elasticity of 500 to 600 N/mm².

## Revendications

1. Bande pour la fabrication de feuilles de matière synthétique, avec une couche résistant à la déchirure et une couche, qui lui est liée, en matière synthétique avec une surface écartée de la couche résistant à la déchirure pour déposer une matière synthétique fluide ou pâteuse pour la feuille de matière synthétique à fabriquer, la couche en matière synthétique présentant la surface présentant au moins partiellement du polypropylène,
Caractérisée en ce que la couche présentant du polypropylène contient des proportions de polyéthylène ainsi que de talc.

2. Bande selon la revendication 1,
caractérisée en ce que la proportion de polyéthylène dans le polypropylène est d'environ 20%.

3. Bande selon la revendication 1,
caractérisée en ce que la matière synthétique de la couche présentant la surface est formée sur la base d'une polymérisation du propylène et de l'éthylène et contient le cas échéant des agents de traitement, des charges, des pigments ou d'autres additifs, la matière synthétique contenant
a) un homopolymérisat du propylène avec une valeur MFI (230°C/2,16 kg) d'environ 0,8 à 3 g/10mn, un point de fusion Tm d'environ 154 à 168°C (déterminé par DSC) et un module E d'environ 900 à 1500N/mm² (déterminé selon DIN 53457) et
b) un homopolymérisat de l'éthylène avec une valeur MFI (190°C/2,16 kg) d'environ 1,5 à 3,0 g/10mm, un point de fusion Tm d'environ 110 à 130°C et un module E d'environ 200 à 400 N/mm2, environ 5 à 20 parties en poids de l'homopolymérisat de l'éthylène revenant à 100 parties en poids de l'homopolymérisat du propylène.

4. Bande selon la revendication 3,
caractérisée en ce que la matière synthétique contient
a) un homopolymérisat du propylène avec une valeur MFI (230°C/2,16 kg) d'environ 1 à 2 g/10mn, un point de fusion Tm d'environ 158 à 164°C et un module E d'environ 1100 à 1300 N/mm² , en particulier sous forme d'un produit CR et,
b) un homopolymérisat de l'éthylène avec une valeur MFI (190°C/2,16 kg) d'environ 1,5 à 2 g/10mm, un point de fusion Tm d'environ 110 à 120°C et un module E d'environ 250 à 350 N/mm².

5. Bande selon la revendication 3 ou 4
caractérisée en ce que la matière synthètique contient un homolymérisat basse densité de l'éthylène à structure linéaire (LLDPE) et/ou un polymère basse densité d'éthylène (LDPE) fabriqué sous pression élevée.

6. Bande selon la revendication 4 ou 5,
caractérisée en ce qu'environ 8 à 12 parties en d'homopolymérisat du polyéthylène reviennent à 100 parties en poids d'homopolymérisat du propylène.

7. Bande selon la revendication 1,
Caractérisée en ce que la matière synthétique contient additionnellement un copolymérisat éthylène-propylène, environ 5 à 40 parties en poids, en particulier environ 10 à 25 parties en poids du copolymérisat éthylène-propylène revenant à 100 parties en poids d'homolymérisat du propylène.

8. Bande selon au moins une des revendications précédentes 3 à 7,
caractérisée en ce que le copolymérisat éthylène-propylène présente une valeur MFI (230°C/2,16 kg) d'environ 1 à 4 g/10 mm, un point de fusion Tm d'environ 140 à 155°C et un module E d'environ 400 à 700 N/mm².

9. Bande selon la revendication 8,
caractérisée en ce que le copolymérisat éthylène-propylène présente une valeur MFI (230°C/2,16 kg) d'environ 1,2 à 2 g/10 mm, un point de fusion Tm d'environ 142 à 150°C et un module E d'environ 500 à 600 N/mm².
